# EUROPÄISCHE PATENTSCHRIFT

(11) **EP 1 524 239 B1**
(45) Veröffentlichungstag und Bekanntmachung des Hinweises auf die Patenterteilung: **13.02.2008**
(21) Anmeldenummer: 04014653.2
(22) Anmeldetag: 23.06.2004
(51) Int. Cl.: C01B 3/32

(54) **Verdampferanordnung zur Erzeugung eines in einem Reformer zur Wasserstoffgewinnung zersetzbaren Kohlenwasserstoff/Luft- oder/und Wasserdampf-Gemisches und Verfahren zum Betreiben einer derartigen Verdampferanordnung**
Evaporator for the realisaton of a hydrogen production from a degradable hydrocarbon/air or/and steam mixture in a reformer and method for the operation of such an evaporator
Dispositif d' évaporation pour la production d' hydrogène d' un mélange dégradable d' hydrocarbone/air ou/et vapeur dans un réformeur et la procédé pour la faire foncionner un tel évaporateur

(30) Priorität: 15.10.2003 DE 10348637
(43) Veröffentlichungstag der Anmeldung: 20.04.2005
(73) Patentinhaber: J. Eberspächer GmbH & Co. KG, 73730 Esslingen (DE)
(72) Erfinder: Kaupert, Andreas, 89073 Ulm (DE); Eberspach, Günter, 72649 Wolfschlugen (DE)

(56) Entgegenhaltungen:
- EP-A- 1 354 852
- DE-A- 10 120 027
- DE-A- 10 130 638
- US-A- 4 459 805
- US-A- 5 197 871
- US-A- 5 617 995

## Beschreibung

Die vorliegende Erfindung betrifft ein Verfahren zum Betreiben einer Verdampferanordnung zur Erzeugung eines in einem Reformer zur Wasserstoffgewinnung zersetzbaren Kohlenwasserstoff/Luft- oder/und Wasserdampf-Gemisches nach dem Oberbegriff von Anspruch 1.

Eine derartiges Verfahren ist in der prioritätsälteren, aber nachveröffentlichten Patentanmeldung mit der Veröffentlichungsnummer EP 1 354 852 A2 beschrieben.

Die Druckschriften DE 101 20 027 A1 und DE 101 30 638 A1 offenbaren jeweils eine Verdampferanordnung zur Erzeugung eines Kohlenwasserstoff/Luft-Gemisches. Diese bekannte Verdampferanordnung umfasst einen BrennerNerdampfer-Bereich mit einer Brenn/Misch-Kammer, in die Luft über eine Eintrittsöffnungsanordnung eintritt, mit einer Kohlenwasserstoffverdampfungseinrichtung, die ein poröses Verdampfermedium und eine diesem zugeordnete Heizeinrichtung umfasst, und mit einem Glühzündorgan zum Zünden von in der Brenn/Misch-Kammer vorhandenem Kohlenwasserstoff/Luft-Gemisch.

Reformer werden dazu eingesetzt, in einer katalytischen Reaktion Kohlenwasserstoffe oder kohlenwasserstoffhaltige Materialien aufzuspalten und dabei Wasserstoff freizusetzen bzw. zu gewinnen. Dieser Wasserstoff kann beispielsweise in Brennstoffzellen zur Erzeugung elektrischer Energie genutzt werden, oder kann in einem Abgasführungssystem einer Brennkraftmaschine zur Abgasaufbereitung genutzt werden. Um das in derartigen Reformern einem Katalysatormaterial zugeleitete Gemisch umsetzen zu können bzw. die katalytische Reaktion starten und aufrechterhalten zu können, ist es erforderlich, den Bereich des Reformers, also im Wesentlichen die mit dem Gemisch in Kontakt tretenden Baugruppen bzw. auch das Katalysatormaterial, ebenso wie das Gemisch auf eine bestimmte Betriebstemperatur zu bringen. Die Temperatur zur Wasserstoffgewinnung aus einem Dieseldampf/Luft-Gemisch liegt zum Starten der katalytischen Reaktion im Bereich von 320°C. Ist diese Reaktion einmal in Gang gesetzt, kann sie bei einer Temperatur von etwa 240°C fortgesetzt werden. Dies bedeutet aber, dass insbesondere beim Einsatz in Kraftfahrzeugen eine möglichst schnelle Erwärmung der relevanten Systembereiche von vergleichsweise niedrigen Temperaturen, die im Bereich von bis zu -40°C liegen können, auf diese vergleichsweise hohen Betriebstemperaturen stattfinden muss.

Hierzu ist es im Allgemeinen bekannt, unter Belastung des Bordspannungssystems von Fahrzeugen die wesentlichen Systemkomponenten zu heizen und auch die Energie zur Verdampfung des im Allgemeinen in flüssiger Form vorliegenden Brennstoffs bzw. Kohlenwasserstoffs zu gewinnen. Dies stellt jedoch eine sehr hohe Belastung des Bordenergieversorgungssystems dar, mit der Folge, dass auf Grund begrenzter Leistungsfähigkeit die zum Erreichen der erforderlichen Temperaturen verstreichende Zeit sehr lang sein kann.

Ziel der vorliegenden Erfindung ist es, ein Verfahren zum Starten einer derartigen Verdampferanordnung bereitzustellen, bei welchem in energetisch sehr effizienter Art und Weise die Zeitdauer bis zum Erreichen der insbesondere im Bereich eines Katalysatormaterials erforderlichen Betriebstemperaturen gering gehalten wird.

Gemäß der vorliegenden Erfindung wird diese Aufgabe gelöst durch ein Verfahren mit den Merkmalen in Anspruch 1.

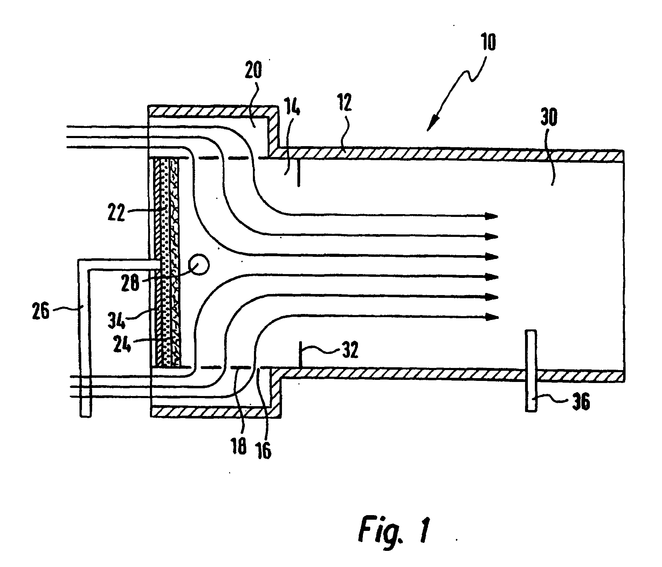

Wesentlich ist, dass die Wärmeenergie zum Erreichen der Betriebstemperaturen insbesondere im Bereich auch des Katalysatormaterial des Reformers nicht nur durch beispielsweise elektrisch betreibbare Heizgeräte bereitgestellt wird, sondern dass zunächst in der Verdampferanordnung ein eigentlich zur Wasserstoffgewinnung zersetzbares Gemisch verbrannt wird. Bei dieser Verbrennung werden hohe Temperaturen erzeugt, so dass die auch in Richtung zu dem Katalysatormaterial bzw. den dort vorhandenen Systemkomponenten des Reformers strömenden Verbrennungsabgase dort zur sehr schnellen Erwärmung beitragen. Es hat sich gezeigt, dass mit der in Figur 1 dargestellten Verdampferanordnung eine Erwärmung von sehr niedrigen Starttemperaturen auf die zum Betrieb erforderlichen Temperaturen im Bereich von über 300°C in weniger als 15 bis 30 Sekunden erreicht werden kann.

Gemäß der vorliegenden Erfindung wird also eine Verdampferanordnung derart betrieben, dass zunächst ein eigentlich zur Wasserstoffgewinnung zersetzbares Gemisch verbrannt wird, und dann, wenn die zur Wasserstoffgewinnung arbeitenden Systemkomponenten, also insbesondere der den Katalysator enthaltende Systembereich des Reformers, in einem Zustand sind, in dem die katalytische Reaktion ablaufen kann, wird die Verbrennung eingestellt. Darauf folgend steht dann das erzeugte Gemisch zur Wasserstoffgewinnung zur Verfügung.

Beispielsweise kann vorgesehen sein, dass zur Verdampfung eine vorzugsweise elektrisch betreibbare Heizeinrichtung aktiviert wird. Diese Heizeinrichtung wird vorzugsweise zumindest während der Schritte c) und d) weiterhin aktiviert.

Um bei Erreichen des zum Ablauf der katalytischen Reaktion erforderlichen thermischen Zustands die Verbrennung beenden zu können, wird vorgeschlagen, dass im Schritt e) die Zufuhr von flüssigem Kohlenwasserstoff oder der kohlenwasserstoffhaltigen Flüssigkeit gedrosselt oder unterbrochen wird oder/und die Zufuhr von Luft gedrosselt oder unterbrochen wird. Die katalytische Reaktion kann nach Beenden der Verbrennung dadurch fortgesetzt bzw. gestartet werden, dass nach Beenden der Verbrennung im Schritt e) die Zufuhr von flüssigem Kohlenwasserstoff oder der kohlenwasserstoffhaltigen Flüssigkeit und die Zufuhr von Luft oder/und Wasserdampf zur Erzeugung des zur Wasserstoffgewinnung zersetzbaren Gemisches fortgesetzt oder wiederaufgenommen wird.

Als besonders erfindungswesentlich hinsichtlich der Effizienz bei der Umsetzung des erzeugten Gemisches in in einer Brennstoffzelle verwendbaren Wasserstoff bzw. ein Wasserstoff enthaltendes Gas hat sich eine Vorgehensweise herausgestellt, bei der nach dem Beenden der Verbrennung im Schritt e) anstelle der oder zusätzlich zur Zufuhr von Luft die Zufuhr von Wasserdampf erfolgt. Es wird somit also ein im Wesentlichen verdampften Kohlenwasserstoff und verdampftes Wasser enthaltendes Gemisch bzw. Dampfgemisch erzeugt, wobei, wie vorangehend bereits ausgeführt, die Bereitstellung des Kohlenwasserstoffdampfes vor allem durch Betreiben der elektrisch betreibbaren Heizeinrichtung sichergestellt werden kann. Es sei hier darauf hingewiesen, dass selbstverständlich auch in einer Phase, in welcher durch Verbrennung des Kohlenwasserstoffdampf enthaltenden Gemisches die im System folgenden Komponenten, wie z.B. der Reformer und ggf. auch eine Brennstoffzelle, erwärmt werden sollen, bereits Wasserdampf beigesetzt werden kann, beispielsweise in geringen Mengen. Ebenso ist es auch möglich, nach dieser Erwärmphase und in der Phase, in welcher Reformat, also wasserstoffhaltiges Gas, erzeugt wird, nicht nur Kohlenwasserstoffdampf und Wasserdampf zu mischen, sondern hier auch noch einen gewissen Anteil an Luft beizumischen.

Um beim Ablauf der katalytischen Reaktion das Bordspannungssystem eines Fahrzeugs so wenig als möglich zu belasten, wird vorgeschlagen, dass im oder/und nach dem Schritt e) die zumindest bis zur Erzeugung der Verbrennung aktivierte Heizeinrichtung nicht aktiviert wird.

Ferner kann bei dem erfindungsgemäßen Verfahren vorgesehen sein, dass als flüssiger Kohlenwasserstoff oder kohlenwasserstoffhaltige Flüssigkeit fossiler oder nicht fossiler Brennstoff, vorzugsweise Dieselbrennstoff, Benzin, Biodiesel oder dergleichen, eingesetzt wird.

Bei dem erfindungsgemäßen Verfahren kann weiter vorgesehen sein, dass anstelle der oder zusätzlich zur Zufuhr von Luft oder/und Wasserdampf Abgase in die Verdampferanordnung eingeleitet werden, welche Abgase bei der Verbrennung von eine Brennstoffzelle verlassendem Restreformat in einem Brenner entstehen. Durch das Rückführen eines gewissen Anteils des in einem Reformer erzeugten Reformats bzw. der Verbrennungsabgase, die entstehen, wenn das eine Brennstoffzelle verlassende Restreformat, also einen gewissen Anteil an Restwasserstoff enthaltendes Gas, in einem Brenner verbrannt wird, kann die Effizienz der Reformaterzeugung gesteigert werden. Weiter kann insbesondere dann, wenn diese zusätzlich in den Ausgangsstoff zur Reformaterzeugung eingespeisten Gase zuvor über eine Wärmetauscheranordnung geleitet werden und dort Wärme abgeben, eine Kühlung des Katalysatormaterials im Reformer erlangt werden. Derartige Wärmetauscher können dazu genutzt werden, die dort abgegebene Wärme auf Wasser zum Verdampfen desselben zu übertragen und diesen Wasserdampf dann, wie vorangehend ausgeführt, zur Reformaterzeugung mit Kohlenwasserstoffdampf zu mischen. Der Einsatz der im Reformat oder den angesprochenen Abgasen transportierten Wärme in Wärmetauschern zur Erzeugung von Wasserdampf kann unabhängig davon erfolgen, ob diese Gase, also das Reformat bzw. die Abgase, in den Prozess rückgeführt werden.

Die vorliegende Erfindung wird nachfolgend mit Bezug auf die beiliegenden Zeichnungen detailliert beschrieben. Es zeigt:
- Fig. 1: eine Verdampferanordnung im Prinzip-Längsschnitt;
- Fig. 2: eine blockbildartige Darstellung eines Reformersystems in Verbindung mit einer Verdampferanordnung.

In der Figur 1 ist eine Verdampferanordnung allgemein mit 10 bezeichnet. Die Verdampferanordnung 10 umfasst eine langgestreckte, röhrenartige Gehäuseanordnung 12, in welcher, wie im Folgenden beschrieben, ein Gemisch aus verdampftem Brennstoff, beispielsweise Dieselbrennstoff, und Luft gebildet wird. In dem Gehäuse 12 ist dazu eine Brenn/Misch-Kammer14 vorgesehen, welcher über eine Mehrzahl von Eintrittsöffnungen 16 in einer Außenumfangswand 18 die Luft aus einem radial äußeren, ringartigen Raum 20 zugeführt wird. An einem Bodenbereich 22 der Brenn/Misch-Kammer 14 ist ein poröses Verdampfermedium 24 vorgesehen, welches beispielsweise durch Vliesmaterial oder sonstiges Gewebe oder mattenartiges Material, Schaumkeramik oder dergleichen gebildet sein kann. Eine Brennstoffzuführleitung 26 führt durch den Bodenbereich 22 hindurch und leitet den zu verdampfenden Brennstoff in das poröse Verdampfermedium 24 ein. In axialem Abstand, axial bezogen auf eine Gesamtströmungsrichtung innerhalb des rohrartigen Gehäuses 12, zu dem Bodenbereich 22 bzw. dem darauf angeordneten Verdampfermedium 24 liegt ein stiftartig ausgebildetes Zündorgan 28, beispielsweise ein Glühzündstift. Dieser erstreckt sich quer zu der angesprochenen Längs- oder Axialrichtung und liegt im Wesentlichen parallel zum Bodenbereich 22 bzw. der der Brenn/Misch-Kammer 14 zugewandten Seite des Verdampfermediums 24. Das durch Luftzufuhr einerseits und durch Brennstoffverdampfung andererseits in der Brenn/Misch-Kammer 14 gebildete Brennstoff/Luftoder/und Wasserdampf-Gemisch, welches auch als Kohlenwasserstoff/Luftoder/und Wasserdampf-Gemisch betrachtet werden kann, verlässt die Brenn/Misch-Kammer 14 und tritt in einen Volumenbereich 30 ein, in welchem das in der Figur nicht dargestellte Katalysatormaterial eines Reformers angeordnet sein kann. Das aus der Brenn/Misch-Kammer durch eine Blende 32 hindurch austretende und auf den Katalysator zu strömende Gemisch wird am Katalysator durch katalytische Reaktion aufgespalten, um Wasserstoff zu gewinnen. Dieser Wasserstoff kann dann weiter verwendet werden, beispielsweise in einer Brennstoffzelle zur Erzeugung elektrischer Energie oder in einem Abgasführungssystem einer Brennkraftmaschine zur Abgasreinigung.

Um in einem derartigen Reformer die katalytische Reaktion durchführen zu können, ist es erforderlich, dass nicht nur das Gemisch, das in dieser katalytischen Reaktion umgesetzt werden soll, sondern auch die verschiedenen Systemkomponenten, wie z. B. das Katalysatormaterial, das dieses umgebende Wandungsmaterial und dergleichen, eine bestimmte Temperatur aufweisen. Beispielsweise kann es bei Einsatz eines Diesel/Luft-Gemisches erforderlich sein, zum Starten der katalytischen Reaktion hier eine Erwärmung auf etwa 320 °C vorzusehen. Ist diese Reaktion einmal in Gang gesetzt, kann sie dann bei einer Temperatur von etwa 240 °C weiterhin ablaufen. Diese hohen Temperaturen erfordern insbesondere zum Starten der katalytischen Reaktion einen vergleichsweise hohen Energieeintrag, um die erforderliche Erwärmung zu erzeugen. Es sei darauf hingewiesen, dass derartige Systeme beispielsweise in Fahrzeugen eingesetzt werden und diese auch bei Außentemperaturen im Bereich von bis zu -40°C betriebsfähig sein müssen. Dies bedeutet also, dass in vergleichsweise kurzer Zeit eine Erwärmung der verschiedenen Systemkomponenten über einen Temperaturbereich von nahezu 400°C erlangt werden muss.

Die Art und Weise, wie bei der Verdampferanordnung 10 diese Erwärmung erlangt wird, wird im Folgenden beschrieben.

Man erkennt in der Figur, dass am Bodenbereich 22 eine Heizeinrichtung 34 vorgesehen ist. Diese ist vorzugsweise elektrisch betreibbar und umfasst beispielsweise eine Heizspirale oder dergleichen, die im dargestellten Beispiel an der von der Brenn/Misch-Kammer 14 abgewandten Seite des Bodenbereichs 22 liegt. Selbstverständlich ist es auch möglich, diese Heizeinrichtung 34 zwischen dem Bodenbereich 22 und dem porösen Verdampfermedium 24 zu positionieren, um einen noch effizienteren Wärmeeintrag in dieses poröse Verdampfermedium zu erlangen. Durch Erregung der Heizeinrichtung 34 kann also die Temperatur im Bereich des porösen Verdampfermediums 24 erhöht werden, so dass dort das Abdampfen des über die Leitung 26 zugeführten Brennstoffs verstärkt auftreten wird. Dabei bildet sich, wie bereits ausgeführt, ein sehr stark mit Brennstoff angereichertes Gemisch aus Luft und Brennstoffdampf in der Brenn/Misch-Kammer 14, wobei hier vorzugsweise derart gearbeitet wird, dass sich ein mageres Gemisch im Bereich von λ = 2 einstellt.

Die durch die Heizeinrichtung 34 eingetragene Wärmemenge würde jedoch nicht ausreichen, um das Gesamtsystem, insbesondere den katalysatornahen Systembereich, auf die erforderlichen Temperaturen zu bringen. Gemäß der vorliegenden Erfindung wird daher beim Starten einer derartigen Verdampferanordnung 10 bzw. eine Reformers zur Wasserstoffgewinnung so vorgegangen, dass das in der Brenn/Misch-Kammer 14 erzeugte Brennstoff/Luft-Gemisch durch Erregung des Zündorgans 28 gezündet wird. Das Zündorgan 28 kann gleichzeitig mit der Erregung der Heizeinrichtung 34 aktiviert werden, kann jedoch auch erst dann aktiviert werden, wenn nach bereits erfolgter Aktivierung der Heizeinrichtung 34 eine ausreichende Menge an Brennstoffdampf in der Brenn/Misch-Kammer 14 vorhanden ist. Da das Zündorgan 28 in einem dem porösen Verdampfermedium 24 nahen Bereich positioniert ist, ist es in einem Bereich wirksam, in dem ein vergleichsweise hoher Brennstoffdampfanteil vorhanden sein wird, so dass die Verbrennung schnell auftreten wird und sich bedingt durch die über die Öffnungen 16 einströmende Luft schnell über den gesamten Bereich der Brenn/Misch-Kammer 14 ausbreiten wird. Die Verbrennungsflamme und die heißen Verbrennungsabgase werden mit der Strömung durch die Blende 32 hindurch mitgetragen und gelangen somit in den Volumenbereich 30. Dort tragen sie sehr effektiv und schnell zur Erwärmung der dort gelegenen Systemkomponenten bei, insbesondere auch zur Erwärmung des Katalysatormaterials. Es hat sich gezeigt, dass auf diese Art und Weise die zum Starten der Katalysatorreaktion erforderlichen Temperaturen in etwa 15 bis 30 Sekunden erlangt werden können.

Liegen in dem für die katalytische Reaktion wesentlichen Systembereich die erforderlichen Temperaturen vor, was entweder durch einen Temperatursensor 36 erfasst werden kann, oder durch Vorgabe einer vorbestimmten Verbrennungszeitdauer sichergestellt werden kann, wird die Verbrennung beendet. Dies kann dadurch erfolgen, dass für eine kurze Zeitdauer die Brennstoffzufuhr oder/und die Luftzufuhr in die Brenn/Misch-Kammer 14 unterbrochen oder verringert wird. Nach Erlöschen der Verbrennungsflamme wird die Brennstoffzufuhr bzw. die Luftzufuhr oder/und Wasserdampfzufuhr wieder aufgenommen, so dass weiterhin dann in der Brenn/Misch-Kammer 14 das im Reformer umzusetzende Kohlenwasserstoff/Luft-Gemisch nunmehr im Bereich λ = 0,4 erzeugt wird, das im nicht verbrannten Zustand zum Katalysatormaterial gelangen wird. Da dieses unmittelbar zuvor durch die heißen Verbrennungsabgase auf die erforderlichen Temperaturen erwärmt worden ist, startet die katalytische Reaktion zur Gewinnung von Wasserstoffen.

Bei der vorangehend beschriebenen erfindungsgemäßen Vorgehensweise kann die Heizeinrichtung 34 zum möglichst schnellen Ausbreiten der Verbrennung und somit auch zum möglichst schnellen Erwärmen der wesentlichen Systembereiche so lange betrieben werden, bis nach Erreichen der vorbestimmten Temperaturen durch die vorangehend beschriebenen Prozeduren die Verbrennung beendet wird. Selbstverständlich ist es auch möglich, dann, wenn durch die Erregung des Glühzündorgans 28 die Verbrennung einmal in Gang gesetzt worden ist, zum Einsparen elektrischer Energie die Heizeinrichtung 34 abzustellen. Auch in diesem Falle wird eine sehr rasche Ausbreitung der Verbrennung auftreten, da vor allem auch im Bereich der Brenn/Misch-Kammer 14 durch die Verbrennung sehr hohe und die Abdampfung von zunächst noch flüssigem Brennstoff aus dem porösen Medium 24 unterstütztende Temperaturen vorliegen. Nach dem Beenden der Verbrennung wird die Heizeinrichtung 34 vorzugsweise nicht mehr in Betrieb gesetzt, um vor allem beim Einsatz in einem Fahrzeug das Bordspannungssystem nicht übermäßig zu belasten. Die Erwärmung des in der Brenn/Misch-Kammer 14 zu erzeugenden Gemisches kann in dieser Phase dann beispielsweise dadurch erlangt werden, dass aus den beispielsweise in einer Brennstoffzelle ablaufenden Prozessen oder aus den im Katalysator des Reformers ablaufenden Prozessen Wärme gewonnen wird, die über ein Wärmeübertragungsfluid und entsprechende Wärmetauscheranordnungen dann auf das Gehäuse 12 übertragen wird. Insbesondere bei Einsatz von schwer siedenden Kraftstoffen, wie z.B. Dieselbrennstoff, kann es vorteilhaft sein, auch während des Reformierungsprozesses, also nach bereits beendeter Verbrennung, die Heizeinrichtung 34 zur Unterstützung der Brennstoffverdampfung weiter zu betreiben bzw. wieder in Betrieb zu nehmen. Selbstverständlich ist es auch möglich, im Bereich des Gehäuses 12 eine weitere, beispielsweise elektrisch betreibbare Heizeinrichtung vorzusehen, um beispielsweise bei sehr niedrigen Außentemperaturen die katalytische Reaktion aufrecht zu erhalten. Beim Einsatz in Verbindung mit einem Abgasführungssystem einer Brennkraftmaschine ist es selbstverständlich möglich, die von der Brennkraftmaschine abgegebenen Abgase um das Gehäuse 12 strömen zu lassen oder diesen Abgasen Wärme zu entziehen und sie auf das Gehäuse 12 zu übertragen.

Bei der erfindungsgemäßen Vorgehensweise wird dann, wenn die gewünschte Betriebstemperatur des Katalysatormaterials erreicht ist, also die Verbrennung beendet worden ist und nunmehr das kohlenwasserstoffdampfhaltige Gemisch in Richtung Reformer strömt, anstelle der Luft Wasserdampf, ggf. mit einem gewissen Luftanteil, dem Kohlenwasserstoffdampf beigemischt. Der Wasserdampf kann in entsprechender Weise wie vorangehend mit Bezug auf die Fig. 1 und hinsichtlich der Lufteinleitung beschrieben in die Brenn/Misch-Kammer 14 eingeleitet werden und dort mit dem aus dem Verdampfermedium 24 ausdampfenden Kohlenwasserstoffdampf gemischt werden. Ein derartiges Gemisch aus Kohlenwasserstoffdampf mit einem hohen Anteil an Wasserdampf führt zu einer deutlich höheren Ausbeute bei der Erzeugung des wasserstoffhaltigen Gases. Weiterhin ist es möglich, im Reformer erzeugtes Reformat, also wasserstoffhaltiges Gas, zurückzuspeisen und zusätzlich in die Brenn/Misch-Kammer 14 einzuleiten. Auch können Abgase, die bei der Verbrennung von die Brennstoffzelle verlassendem Restwasserstoff entstehen, in die Brenn/Misch-Kammer 14 mit eingeleitet werden.

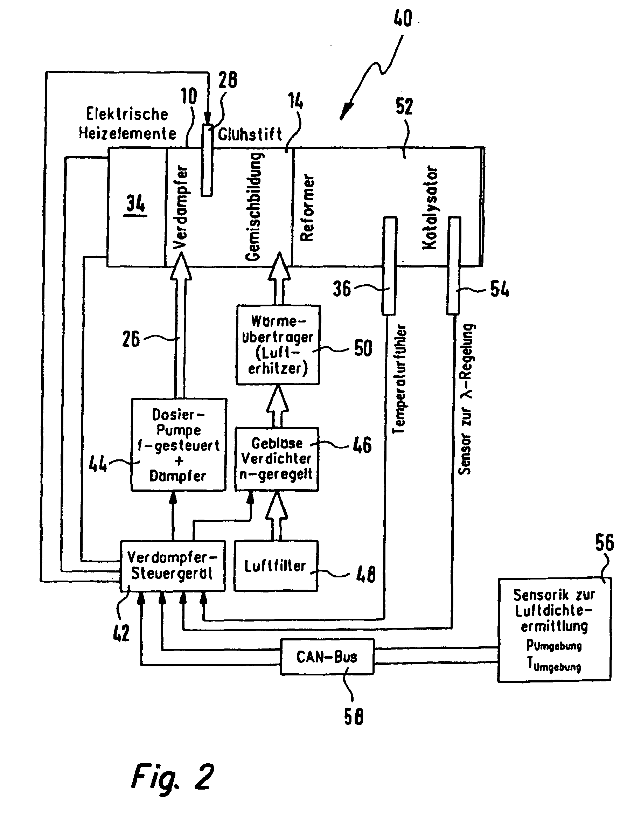

Die in verschiedenen Systembereichen, die nachfolgend mit Bezug auf die Fig. 2 auch noch beschrieben werden, entstehende Wärme, also beispielsweise die im Reformat transportierte Wärme oder die bei der Verbrennung von Restwasserstoff nach einer Brennstoffzelle entstehende Wärme, kann, wie vorangehend ebenfalls bereits ausgeführt, genutzt werden, um verschiedene Systembereiche vorzuwärmen. Gleichzeitig kann diese Wärme auch genutzt werden, um Luft zu erwärmen oder/und Wasser zu verdampfen und somit den Wasserdampf bereitzustellen. Selbstverständlich können hierfür auch separate Heiz- bzw. Brenneranordnungen vorgesehen sein.

Weiter kann es vorteilhaft sein, den Wasserdampf oder vorgewärmte Luft auf der von der Brenn/Misch-Kammer 14 abgewandten Seite des Bodenbereichs 22 des Gehäuses 12 vorbeizuleiten und somit diesen Bodenbereich 22 bereits vorzuwärmen. Dies vermindert die im Bereich der Heizeinrichtung 34 bereitzustellende Heizleistung. Dabei sollte insbesondere bei Einsatz von Benzin als Kohlenwasserstoff jedoch dafür gesorgt werden, dass eine derartige Vorwärmung der Brennstoffleitung 26 nicht auftritt.

In Fig. 2 ist ein Reformersystem 40 dargestellt, bei welchem die Verdampferanordnung 10 zum Einsatz kommt. Man erkennt auch in der Fig. 2 in der Verdampferanordnung 10 die unter Ansteuerung eines Steuergerätes 42 stehende Heizeinrichtung 34. Eine ebenfalls unter der Ansteuerung des Steuergeräts 42 stehende Dosierpumpe 44 speist den zu verdampfenden Brennstoff bzw. Kohlenwasserstoff über die Leitung 26 in die Brenn/Misch-Kammer 14 ein, wobei diese Einspeisung in frequenzgesteuerter, also getakteter Art und Weise vorgenommen werden kann. Der Dosierpumpe 44 kann ein Dämpfer zugeordnet sein, also ein Zwischenspeicher, aus welchem dann die geförderte Flüssigkeit in Richtung Brenn/Misch-Kammer 14 in mehr oder weniger kontinuierlicher Art und Weise abgegeben wird. Ein ebenfalls unter der Ansteuerung des Steuergeräts 42 stehendes Gebläse 46 nimmt Luft über einen Luftfilter 48 auf und speist diese, ggf. nach Durchlaufen eines Wärmetauschers 50 in vorerwärmter Art und Weise in die Brenn/Misch-Kammer 14 zur Gemischbildung ein. Man erkennt ferner den als Zündorgan wirksamen Glühzündstift 28, welcher das in der Brenn/Misch-Kammer 14 gebildete Brennstoff/Luft-Gemisch zur Zündung bringt. Stromabwärts der Brenn/Misch-Kammer 14 befindet sich der Reformerteil 52 des Reformersystems 40 mit dem Katalysatormaterial. In diesem Bereich ist auch der Temperatursensor 36 vorgesehen. Ferner kann ein Lambdasensor 54 vorgesehen sein, welcher dazu dient, wie vorangehend bereits beschrieben in verschiedenen Phasen des Betriebs das Brennstoff/Luft-Verhältnis so einzustellen, dass ein gewünschter Lambdawert erhalten wird.

Die verschiedenen vom Steuergerät 42 vorgenommenen Ansteuermaßnahmen laufen unter Miteinbeziehung verschiedener Parameter, wie z. B. der vom Temperatursensor 36 erfassten Temperatur, dem Ausgangswert des Lambdasensors 54 sowie verschiedener weiterer Sensoren, ab, die für den Betrieb des Systems 40 relevante Daten liefern. Dies kann beispielsweise auch zur korrekten Einstellung des Gemisches eine Sensorik 56 sein, durch welche der Umgebungsdruck und die Umgebungstemperatur ggf. zur Luftdichteermittlung erfasst werden und deren Erfassungsdaten über ein Datenbussystem 58 in das Steuergerät 42 eingeleitet werden.

Das in der Fig. 2 dargestellte System kann zum Starten einerseits und zur Wasserstoffgewinnung andererseits dann so wie vorangehend mit Bezug auf die Fig. 1 bereits beschrieben betrieben werden.

Durch die vorliegende Erfindung sind ein Verfahren zum Starten einer Verdampferanordnung bzw. ein Verfahren zum Starten eines Reformers zur Gewinnung von Wasserstoff vorgesehen, die bei vergleichsweise einfachem Aufbau sicherstellen, dass in kürzester Zeit die zum Durchführen der katalytischen Reaktion erforderlichen Temperaturen erreicht werden können, ohne das elektrische Bordspannungssystem übermäßig belasten zu müssen. Dabei zieht die Erfindung im Wesentlichen Nutzen daraus, dass das im Reformer zu zersetzende Gemisch selbst verbrennbar ist, so dass in einer kurzen Zeitdauer der Startphase zwar auf die Durchführung einer katalytischen Reaktion verzichtet wird, stattdessen aber das eigentlich zur Wasserstoffgewinnung herangezogene Grundmaterial verbrannt wird, um das Reformersystem und Brennstoffzellensystem auf die erforderlichen Temperaturen zu bringen.

Es sei abschließend darauf hingewiesen, dass dann, wenn im vorliegenden Text von Kohlenwasserstoff/Luft-Gemisch bzw. Kohlenwasserstoff/Wasserdampf-Gemisch die Rede ist, dies nicht ausschließt, dass diesem Gemisch noch andere Stoffe, wie beispielsweise im erstgenannten Beispiel Wasserdampf und im zweitgenannten Beispiel Luft, beigemischt werden. Es soll lediglich zum Ausdruck gebracht werden, dass die jeweiligen konkret angesprochenen Gemischbildner in jedem Falle vorhanden sind.

## Patentansprüche

1. Verfahren zum Starten einer Verdampferanordnung (10) zur Erzeugung eines in einem Reformer zur Wasserstoffgewinnung zersetzbaren Kohlenwasserstoff/Luft- oder/und Wasserdampf-Gemisches, umfassend die Schritte:
a) Erwärmen und Verdampfen von flüssigem Kohlenwasserstoff oder kohlenwasserstoffhaltiger Flüssigkeit,
b) Mischen des im Schritt a) erzeugten Dampfes mit Luft,
c) Zünden des im Schritt b) erzeugten Gemisches zum Starten einer Gemisch-Verbrennung,
d) Aufrechterhalten der Verbrennung bis zum Ablauf einer vorbestimmten Zeitdauer oder/und bis in einem oder mehreren vorbestimmten Systembereichen eine vorbestimmte Temperatur vorliegt,
e) nach Ablauf der vorbestimmten Zeitdauer oder/und nach Erreichen der vorbestimmten Temperatur, Beenden der Verbrennung,
**dadurch gekennzeichnet, dass** nach dem Beenden der Verbrennung im Schritt e) die Zufuhr von Wasserdampf erfolgt.

2. Verfahren nach Anspruch 1,
**dadurch gekennzeichnet, dass** im oder/und nach dem Schritt e) eine zumindest bis zur Erzeugung der Verbrennung aktivierte Heizeinrichtung (34) nicht aktiviert wird.

3. Verfahren nach Anspruch 1 oder 2,
**dadurch gekennzeichnet, dass** zur Verdampfung eine vorzugsweise elektrisch betreibbare Heizeinrichtung (34) aktiviert wird.

4. Verfahren nach Anspruch 3,
**dadurch gekennzeichnet, dass** die Heizeinrichtung (34) zumindest während der Schritte c) und d) aktiviert bleibt.

5. Verfahren nach einem der Ansprüche 1 bis 4,
**dadurch gekennzeichnet, dass** im Schritt e) die Zufuhr von flüssigem Kohlenwasserstoff oder der kohlenwasserstoffhaltigen Flüssigkeit gedrosselt oder unterbrochen wird oder/und die Zufuhr von Luft gedrosselt oder unterbrochen wird.

6. Verfahren nach Anspruch 5,
**dadurch gekennzeichnet, dass** nach Beenden der Verbrennung im Schritt e) die Zufuhr von flüssigem Kohlenwasserstoff oder der kohlenwasserstoffhaltigen Flüssigkeit und die Zufuhr von Luft oder/und Wasserdampf zur Erzeugung des zur Wasserstoffgewinnung zersetzbaren Gemisches fortgesetzt oder wiederaufgenommen wird.

7. Verfahren nach einem der Ansprüche 1 bis 6,
**dadurch gekennzeichnet, dass** im oder/und nach dem Schritt e) die zumindest bis zur Erzeugung der Verbrennung aktivierte Heizeinrichtung (34) nicht aktiviert wird.

8. Verfahren nach einem der Ansprüche 1 bis 7,
**dadurch gekennzeichnet, dass** als flüssiger Kohlenwasserstoff oder kohlenwasserstoffhaltige Flüssigkeit fossiler oder nicht fossiler Brennstoff, vorzugsweise Dieselbrennstoff, Benzin, Biodiesel oder dergleichen, eingesetzt wird.

9. Verfahren nach einem der Ansprüche 1 bis 8,
**dadurch gekennzeichnet, dass** anstelle der oder zusätzlich zur Zufuhr von Luft oder/und Wasserdampf in dem Reformer erzeugtes Reformat oder/und Abgase in die Verdampferanordnung eingeleitet werden, welche Abgase bei der Verbrennung von eine Brennstoffzelle verlassendem Restreformat in einem Brenner entstehen.

## Claims

1. Method for starting an evaporator arrangement (10) for generating a hydrocarbon/air or/and hydrocarbon/water-vapour mixture which can be broken down in a reformer for hydrogen recovery, comprising the steps:
a) heating and evaporating liquid hydrocarbon or hydrocarbon-containing liquid,
b) mixing the vapour generated in step a) with air,
c) igniting the mixture generated in step b) for starting a mixture combustion,
d) maintaining the combustion until a predetermined time duration has elapsed or/and until a predetermined temperature is present in one or more predetermined system regions,
e) after the predetermined time duration has elapsed or/and after the predetermined temperature has been reached, ending the combustion,
**characterized in that** the supply of water vapour takes place after the ending of the combustion in step e).

2. Method according to Claim 1,
**characterized in that** in or/and after step e), a heating device (34) which is activated at least until the generation of the combustion is not activated.

3. Method according to Claim 1 or 2,
**characterized in that** a preferably electrically operable heating device (34) is activated for evaporation.

4. Method according to Claim 3,
**characterized in that** the heating device (34) remains activated at least during steps c) and d).

5. Method according to one of Claims 1 to 4,
**characterized in that**, in step e), the supply of liquid hydrocarbon or of the hydrocarbon-containing liquid is throttled or interrupted or/and the supply of air is throttled or interrupted.

6. Method according to Claim 5,
**characterized in that**, after the end of the combustion in step e), the supply of liquid hydrocarbon or of the hydrocarbon-containing liquid and the supply of air or/and water vapour for generating the mixture which can be broken down for hydrogen recovery is continued or resumed.

7. Method according to one of Claims 1 to 6,
**characterized in that** in or/and after step e), the heating device (34) which is activated at least until the generation of the combustion is not activated.

8. Method according to one of Claims 1 to 7,
**characterized in that** fossil fuel or non-fossil fuel, preferably diesel fuel, gasoline, biodiesel or the like, is used as liquid hydrocarbon or hydrocarbon-containing liquid.

9. Method according to one of Claims 1 to 8,
**characterized in that** reformate which is generated in the reformer or/and exhaust gases, which exhaust gases are generated during the combustion, in a burner, of residual reformate which leaves a fuel cell, are introduced into the evaporator arrangement instead of or in addition to the supply of air or/and water vapour.

## Revendications

1. Procédé de démarrage d'un système d'évaporateur (10) destiné à former un mélange d'air et d'hydrocarbures et/ou de vapeur d'eau qui peut être décomposé dans un reformeur en vue de la récupération d'hydrogène, lequel procédé comprend les étapes qui consistent à :
a) chauffer et évaporer un hydrocarbure liquide ou un liquide qui contient des hydrocarbures,
b) mélanger à de l'air la vapeur formée à l'étape a),
c) enflammer le mélange formé à l'étape b) pour lancer une combustion du mélange,
d) maintenir la combustion pendant une durée prédéterminée et/ou jusqu'à ce qu'une température prédéterminée règne dans une ou plusieurs parties prédéterminées du système,
e) arrêter la combustion après que la durée prédéterminée s'est écoulée et/ou après que la température prédéterminée a été atteinte, **caractérisé en ce que** l'apport de vapeur d'eau est effectué lorsque la combustion est terminée à l'étape e).

2. Procédé selon la revendication 1, **caractérisé en ce qu'**un dispositif de chauffage (34) activé au moins jusqu'à l'obtention de la combustion n'est plus activé pendant et/ou après l'étape e).

3. Procédé selon les revendications 1 ou 2, **caractérisé en ce que** pour l'évaporation, on active un dispositif de chauffage (34) qui fonctionne de préférence à l'électricité.

4. Procédé selon la revendication 3, **caractérisé en ce que** le dispositif de chauffage (34) reste activé au moins pendant les étapes c) et d).

5. Procédé selon l'une des revendications 1 à 4, **caractérisé en ce qu'**à l'étape e), l'apport d'hydrocarbure liquide ou du liquide qui contient des hydrocarbures est restreint ou interrompu et/ou l'apport d'air est restreint ou interrompu.

6. Procédé selon la revendication 5, **caractérisé en ce que** l'apport d'hydrocarbure liquide ou du liquide qui contient des hydrocarbures et l'apport d'air et/ou de vapeur d'eau en vue de l'obtention du mélange décomposable pour l'obtention d'hydrogène sont poursuivis ou repris lorsque la combustion est terminée à l'étape e).

7. Procédé selon l'une des revendications 1 à 6, **caractérisé en ce que** le dispositif de chauffage (34) activé au moins jusqu'à l'obtention de la combustion n'est plus activé pendant et/ou après l'étape e).

8. Procédé selon l'une des revendications 1 à 7, **caractérisé en ce que** comme hydrocarbure liquide ou liquide contenant des hydrocarbures, on utilise un combustible fossile ou non fossile, de préférence du combustible diesel, de l'essence, du biodiesel ou similaires.

9. Procédé selon l'une des revendications 1 à 8, **caractérisé en ce qu'**au lieu de l'apport d'air et/ou de vapeur d'eau ou en plus de cet apport, le produit de reformage formé dans le reformeur et/ou des gaz de fumée produits dans un brûleur lors de la combustion d'un produit résiduel de reformage qui quitte une cellule à combustible sont introduits dans le système d'évaporateur.
